# FASCICULE DE BREVET EUROPEEN

(11) **EP 2 978 649 B1**
(45) Date de publication et mention de la délivrance du brevet: **23.02.2022**
(21) Numéro de dépôt: 14718686.0
(22) Date de dépôt: 27.03.2014
(51) Int. Cl.: B60W 30/18, B60W 10/06, B60W 10/02

(54) **PROCEDE ET DISPOSITIF DE CONTROLE DU REDEMARRAGE D'UN VEHICULE EQUIPE D'UNE TRANSMISSION AUTOMATISEE**
VERFAHREN UND VORRICHTUNG ZUR STEUERUNG DES NEUSTARTS EINER FAHRZEUG MIT AUTOMATIKGETRIEBE
METHOD AND DEVICE FOR CONTROLLING THE RESTARTING OF A VEHICLE PROVIDED WITH AN AUTOMATIC TRANSMISSION

(30) Priorité: 29.03.2013 FR 1352895
(43) Date de publication de la demande: 03.02.2016
(73) Titulaire: Renault s.a.s, 92100 Boulogne-Billancourt (FR)
(72) Inventeur: GOURARA, Amine, F-91180 Saint Germain Les Arpajon (FR); DUVIVIER, Vincent, F-91510 Janville Sur Juine (FR); ROUDEAU, Frédéric, F-94400 Vitry Sur Seine (FR)
(86) Numéro de dépôt international: PCT/FR2014/050724
(87) Numéro de publication internationale: WO 2014/155010

(56) Documents cités:
- EP-A2- 1 258 386
- EP-A2- 1 505 309
- US-A1- 2006 184 304
- US-A1- 2010 174 465

## Description

La présente invention concerne les applications de coupure automatique du moteur à l'arrêt du véhicule avec redémarrage au lever de pied de la pédale de frein et/ou enfoncement de la pédale d'accélérateur par le conducteur, dites « stop and start », sur des véhicules équipés de transmissions automatiques ou automatisées munies d'un système de couplage progressif du moteur avec la transmission lors des redémarrages.

Plus précisément, elle a pour objet un procédé et un dispositif de contrôle du redémarrage automatique d'un véhicule équipé d'une transmission automatique lors du relâchement de la pédale de frein ou de l'enfoncement de la pédale d'accélérateur par le conducteur.

Sur les véhicules équipés de transmissions automatiques, les exigences de prestation et d'agrément de conduite imposent un temps de « redécollage » automatique du véhicule particulièrement réduit. Cette contrainte implique d'augmenter rapidement le couple moteur en phase de redémarrage dans diverses situations d'arrêt automatique du moteur en circulation, et de réduire, dans toute la mesure du possible, le temps de transfert du couple moteur aux roues.

Dans la plupart des applications « Stop and Start » actuelles, la « robustesse » du couple moteur transmis au décollage est privilégiée. Pour cela, on définit un seuil de régime moteur élevé, en dessous duquel le transfert de couple au système de transmission n'est pas établi. Le seuil est généralement proche de l'établissement du régime de ralenti. Cette option se traduit malheureusement par un délai d'autorisation de transmission du couple aux roues particulièrement important, qui ne permet pas de satisfaire aux objectifs de réduction du temps de redécollage.

Les méthodes dans lesquelles on impose au moteur un seuil de régime minimum avant d'autoriser la transmission du couple vers la transmission, présentent notamment les inconvénients suivants :
- si le seuil est choisi au plus bas (vers le seuil de régime moteur « autonome »), le couple moteur disponible risque d'être inférieur à la consigne à transmettre à la boîte de vitesse pour éviter de caler et pouvoir décoller au plus vite,
- s'il est choisi au plus haut, outre la perte de temps lié au délai de transfert, le temps de disponibilité du couple aux roues peut être impacté par la non-linéarité du profil de régime instantané en fonction du temps.

Le document US 2006/184304 A1 décrit un procédé et un dispositif pour contrôler le couple moteur pendant le redémarrage automatique d'un véhicule en fonction d'un temps cible pour le couplage d'un embrayage.

La présente invention vise à s'affranchir d'un seuil de régime moteur imposé pour autoriser le transfert du couple moteur aux roues, afin de réduire le temps de décollage.

Dans ce but, elle prévoit un procédé comprenant les caractéristiques de la revendication 1 et un dispositif comprenant les caractéristiques de la revendication 6.

La présente invention sera mieux comprise à la lecture de la description suivante d'un mode de réalisation non limitatif de celle-ci, en se reportant aux dessins annexés, sur lesquels :
- la figure 1 est un schéma fonctionnel du dispositif de l'invention, et
- la figure 2 illustre le contrôle de couple.

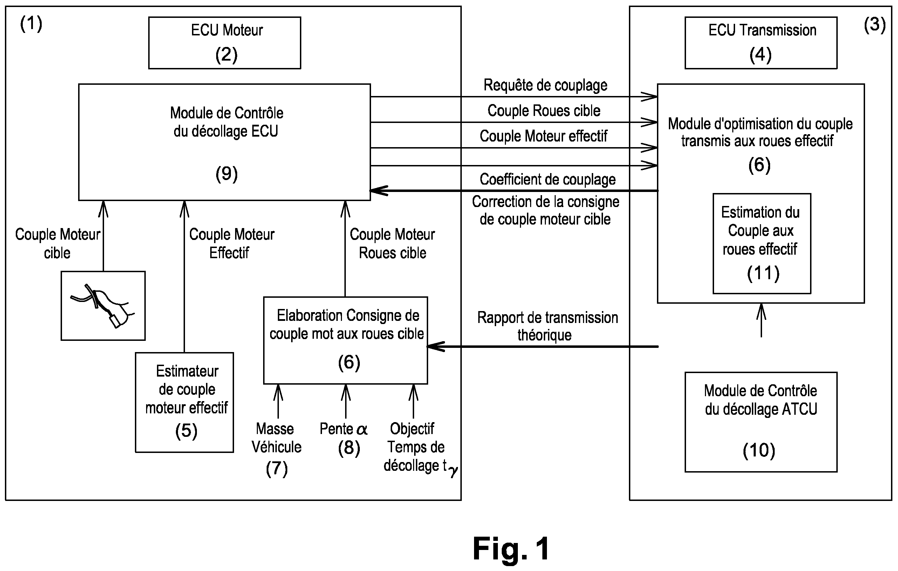

Le dispositif de la figure 1 est composé du calculateur moteur ou calculateur d'injection (ECU Moteur) 2 du moteur 1 (non représenté) et du calculateur de la transmission automatique 4 (ECU Transmission) du véhicule, (non représentée).

Au sein de l'ECU 2, un module de contrôle de décollage 9 reçoit une information de couple moteur cible à partir de la pédale d'accélérateur du conducteur, ainsi qu'une information de couple moteur effectif de la part d'un estimateur de couple effectif 5. Le module 9 reçoit par ailleurs une consigne de couple moteur aux roues cible, élaborée dans un module d'optimisation 6, à partir de la masse m du véhicule (estimateur de masse 7), de l'information pente de la route α (estimateur de pente 8), d'un objectif de temps décollage t_{γ}, et du rapport de transmission théorique.

Au sein de l'ECU Transmission 4, un module d'optimisation du couple transmis aux roues effectif 11, reçoit une instruction d'un Module de Contrôle du décollage ACTU 10. Le module d'optimisation 11 reçoit du module de contrôle de décollage ECU 9, une requête de couplage, le couple aux roues cible et le couple moteur effectif. En retour, il lui transmet un coefficient de couplage de la transmission au moteur, et une correction de la consigne de couple moteur cible.

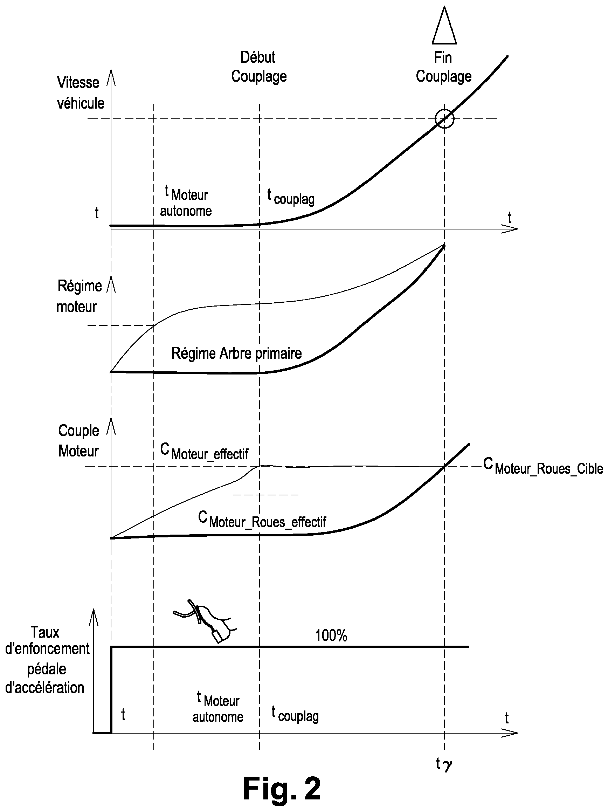

En se reportant à la figure 2, voit que l'opération de décollage est réalisée en respectant un objectif de temps, fixé par l'instant t_{γ} de fin de couplage, auquel le véhicule doit avoir décollé et atteint une accélération cible y, imposée par le dispositif. Au cours de cette opération, on distingue deux phases de fonctionnement. La première phase, ou phase de lancement du moteur, commence à l'instant t = 0 où conducteur enfonce sa pédale d'accélération, ou relâche sa pédale de frein. Sur le schéma, le taux d'enfoncement de la pédale d'accélération augmente brutalement. Pendant cette première phase, le régime moteur et le couple moteur effectif augmentent, sans que l'arbre primaire de la boîte tourne (régime primaire =0), ni que le véhicule se déplace (vitesse véhicule = 0).

L'autorisation de prélever du couple est donnée dès que le couple moteur effectif atteint sa cible. C'est l'instant du début du couplage t_{couplage}, mentionné sur la figure 2, où le couple effectif devient supérieur à la consigne de couple moteur cible à transmettre aux roues. A partir de cet instant, le système couple progressivement la transmission au moteur, en optimisant le coefficient de couplage afin de réaliser au plus tôt la mise en déplacement du véhicule. L'arbre primaire commence à tourner, et le véhicule commence à se déplacer. Cette deuxième phase se poursuit jusqu'à l'instant t_{γ} où tout le couple moteur est transmis aux roues. Le couple aux roues effectif a rattrapé le couple moteur effectif, et le véhicule a atteint sa cible d'accélération. Cet instant satisfait à l'objectif de temps de décollage de la stratégie de contrôle proposée, où le couple moteur est asservi à une consigne de couple à transmettre aux roues satisfaisant au respect d'un objectif de temps de redécollage.

Sans sortir du cadre de l'invention, l'instant t = 0 peut ne pas être celui où la pédale d'accélération est enfoncée, mais celui où la pédale de frein est relâchée. Dans ce cas, le moteur est démarré plus tôt, et le régime moteur peut commencer à s'élever avant l'enfoncement de la pédale d'accélération. La suite de l'opération est la même.

Le dispositif décrit, assure le contrôle du redémarrage automatique d'un véhicule équipé d'une transmission automatique, lors du relâchement de la pédale de frein ou de l'enfoncement de la pédale d'accélérateur par le conducteur. Il comporte une première phase de lancement du moteur, au cours de laquelle le couple moteur commence à s'élever sans être transmis aux roues, suivie d'une deuxième phase de décollage, au cours de laquelle il est progressivement transmis aux roues.

Son fonctionnement est le suivant. En phase de coupure automatique du moteur à l'arrêt, le conducteur exprime sa volonté de faire décoller le véhicule en relevant son pied de la pédale de frein, et éventuellement en appuyant sur la pédale d'accélérateur. Cette action provoque le redémarrage automatique du moteur, suivi du couplage de la transmission pour faire décoller le véhicule. La volonté d'accélération demandée par le conducteur par les pédales de frein et/ou d'accélérateur, est traduite en couple moteur cible, afin d'obtenir un couple roues cible.

Le Module de contrôle du décollage 9 de l'ECU Moteur 2 informe l'ECU Transmission 4, des paramètres suivants :
- autorisation de prélever du couple via le dispositif de couplage moteur/transmission à l'instant t_{couplage} (début du couplage),
- régime moteur,
- couple moteur effectif,
- couple moteur cible,
- couple roues cible.

L'ECU Transmission 4 informe le Module de contrôle du décollage 9 de l'ECU Moteur 2 des paramètres suivants :
- coefficient de couplage moteur/transmission,
- demande de modulation du couple moteur cible.

L'optimisation du coefficient de transmission est réalisée par cartographies, en fonction du régime moteur, du couple moteur effectif, du couple roues cible, de la masse du véhicule, et de la pente.

Le système de contrôle de transmission peut éventuellement moduler la consigne de couple moteur pendant la phase de décollage, jusqu'à ce que le dispositif de couplage ait atteint son coefficient de transmission maximal.

La méthode proposée présente l'avantage de ne pas imposer le calibrage du seuil de régime en fonction de la température d'eau moteur, et de la charge des accessoires du moteur. Elle assure le contrôle du couple transmis aux roues, qui est nécessaire pour garantir le respect d'un objectif de temps de décollage.

## Revendications

1. Procédé de contrôle du redémarrage automatique d'un véhicule équipé d'une transmission automatique lors du relâchement de la pédale de frein ou de l'enfoncement de la pédale d'accélérateur par le conducteur, comportant une première phase de lancement du moteur au cours de laquelle le couple moteur commence à s'élever sans être transmis aux roues suivie d'une deuxième phase de décollage au cours de laquelle il est progressivement transmis aux roues en étant asservi à une consigne de couple à transmettre aux roues satisfaisant au respect d'un objectif de temps de décollage, **caractérisé en ce que** l'autorisation de prélever du couple par l'intermédiaire d'un
système de couplage du moteur et de la transmission est donnée a un
calculateur de la transmission (4) par un module de décollage d'un calculateur d'injection du moteur (2) à l'instant (t*_{couplage}*) où le couple moteur effectif a atteint la consigne de couple à transmettre aux roues.

2. Procédé de contrôle selon la revendication 1, **caractérisé en ce que** le calculateur de la transmission (4) informe le calculateur d'injection (2), du coefficient de couplage du moteur et de la transmission.

3. Procédé de contrôle selon la revendication 1 ou 2, **caractérisé en ce que** le calculateur de la transmission (4) informe le calculateur d'injection (2), d'une demande de modulation du couple moteur cible.

4. Procédé de contrôle selon la revendication 3, **caractérisé en ce que** le coefficient de transmission est optimisé à partir de cartographies établies en fonction du régime moteur, du couple moteur effectif, du couple roues cible, de la masse du véhicule, et de la pente.

5. Procédé de contrôle selon l'une des revendications précédentes, **caractérisé en ce que** le calculateur de la transmission (4) module la consigne de couple moteur pendant la phase de décollage, jusqu'à ce que le dispositif de couplage atteigne son coefficient de transmission maximal.

6. Dispositif de contrôle du redémarrage automatique
d'un véhicule équipé d'une transmission automatique lors de l'enfoncement de la pédale d'accélérateur par le conducteur ou lors
du relâchement de la pédale de frein et de l'enfoncement de
la pédale d'accélérateur par le conducteur, comportant un calculateur de transmission (4) et un calculateur d'injection du moteur (2) comprenant un module de contrôle du décollage (9) qui reçoit une information de couple moteur cible à partir de la pédale d'accélérateur du conducteur, et informe le calculateur de la transmission (4) du régime moteur, du couple moteur effectif, du couple moteur cible, du couple roues cible, et d'une autorisation
de prélever du couple par l'intermédiaire du système de couplage entre le moteur et la transmission, **caractérisé en ce que** le module de contrôle de décollage (9) du calculateur d'injection (2) donne au calculateur de la transmission (4) l'autorisation de prélever du couple à l'instant (t_{couplage}) où le couple moteur effectif atteint la consigne de couple à transmettre aux roues.

7. Dispositif de contrôle selon la revendication 6, **caractérisé en ce que** le calculateur de la transmission (4) informe le module de contrôle du décollage (9), du coefficient de couplage du moteur et de la transmission.

8. Dispositif de contrôle selon la revendication 6 ou 7, **caractérisé en ce qu'**il comporte un module d'optimisation (11) du couple transmis aux roues transmettant au module de décollage (9) un coefficient de couplage de la transmission et une correction de la consigne de couple moteur cible.

9. Dispositif de contrôle selon la revendication 8, **caractérisé en ce que** l'optimisation du coefficient de transmission est réalisée par cartographies, en fonction du régime moteur, du couple moteur effectif, du couple roues cible, de la masse du véhicule, et de la pente.

10. Dispositif de contrôle selon l'une des revendication 6 à 9, **caractérisé en ce que** le calculateur de la transmission (4) comporte un module de contrôle du décollage (10).

## Patentansprüche

1. Verfahren zur Steuerung des automatischen Neustarts eines mit einem Automatikgetriebe ausgerüsteten Fahrzeugs beim Loslassen des Bremspedals oder Niederdrücken des Gaspedals durch den Fahrer, umfassend eine erste Phase des Anlassens des Motors, während der das Motordrehmoment zu steigen beginnt, ohne auf die Räder übertragen zu werden, gefolgt von einer zweiten Phase des Anfahrens, während der es progressiv auf die Räder übertragen wird und dabei von einem auf die Räder zu übertragenden Drehmomentsollwert abhängt, der eine Zielvorgabe für die Anfahrzeit erfüllt, **dadurch gekennzeichnet, dass** die Erlaubnis für das Abführen des Drehmoments mit Hilfe eines Systems zum Kuppeln des Motors und des Getriebes von einem Anfahrmodul eines Einspritzrechners des Motors (2) an einen Rechner des Getriebes (4) zu dem Zeitpunkt (t*_{Kupplung}*) erteilt wird, an dem das effektive Motordrehmoment den auf die Räder zu übertragenden Drehmomentsollwert erreicht hat.

2. Steuerungsverfahren nach Anspruch 1, **dadurch gekennzeichnet, dass** der Getrieberechner (4) den Einspritzrechner (2) über den Kupplungskoeffizienten des Motors und des Getriebes informiert.

3. Steuerungsverfahren nach Anspruch 1 oder 2, **dadurch gekennzeichnet, dass** der Getrieberechner (4) den Einspritzrechner (2) über eine Anforderung zur Anpassung des Zielmotordrehmoments informiert.

4. Steuerungsverfahren nach Anspruch 3, **dadurch gekennzeichnet, dass** der Übertragungskoeffizient anhand von Kartographien optimiert wird, die in Abhängigkeit von der Motordrehzahl, dem effektiven Motordrehmoment, dem Zielräderdrehmoment, der Masse des Fahrzeugs und der Steigung erstellt werden.

5. Steuerungsverfahren nach einem der vorhergehenden Ansprüche, **dadurch gekennzeichnet, dass** der Getrieberechner (4) den Motordrehmomentsollwert während der Anfahrphase anpasst, bis die Kupplungsvorrichtung ihren maximalen Übertragungskoeffizienten erreicht.

6. Vorrichtung zur Steuerung des automatischen Neustarts eines mit einem Automatikgetriebe ausgerüsteten Fahrzeugs beim Niederdrücken des Gaspedals durch den Fahrer oder beim Loslassen des Bremspedals und Niederdrücken des Gaspedals durch den Fahrer, umfassend einen Getrieberechner (4) und einen Einspritzrechner des Motors (2), der ein Anfahrsteuerungsmodul (9) beinhaltet, das anhand des Gaspedals des Fahrers eine Information über das Zielmotordrehmoment empfängt und den Getrieberechner (4) über die Motordrehzahl, das effektive Motordrehmoment, das Zielmotordrehmoment, das Zielräderdrehmoment und eine Erlaubnis zum Abführen des Drehmoments mit Hilfe des Systems zum Kuppeln des Motors mit dem Getriebe informiert, **dadurch gekennzeichnet, dass** das Anfahrsteuerungsmodul (9) des Einspritzrechners (2) dem Getrieberechner (4) die Erlaubnis für das Abführen des Drehmoments zu dem Zeitpunkt (t*_{Kupplung}*) erteilt, an dem das effektive Motordrehmoment den auf die Räder zu übertragenden Drehmomentsollwert erreicht.

7. Steuerungsvorrichtung nach Anspruch 6, **dadurch gekennzeichnet, dass** der Getrieberechner (4) das Anfahrsteuerungsmodul (9) über den Kupplungskoeffizienten des Motors und des Getriebes informiert.

8. Steuerungsvorrichtung nach Anspruch 6 oder 7, **dadurch gekennzeichnet, dass** sie ein Modul zur Optimierung (11) des auf die Räder übertragenen Drehmoments umfasst, das einen Kupplungskoeffizienten des Getriebes und eine Korrektur des Zielmotordrehmomentsollwerts an das Anfahrmodul (9) überträgt.

9. Steuerungsvorrichtung nach Anspruch 8, **dadurch gekennzeichnet, dass** die Optimierung des Übertragungskoeffizienten anhand von Kartographien in Abhängigkeit von der Motordrehzahl, dem effektiven Motordrehmoment, dem Zielräderdrehmoment, der Masse des Fahrzeugs und der Steigung erfolgt.

10. Steuerungsvorrichtung nach einem der Ansprüche 6 bis 9, **dadurch gekennzeichnet, dass** der Getrieberechner (4) ein Anfahrsteuerungsmodul (10) umfasst.

## Claims

1. Method for controlling the automatic restarting of a vehicle equipped with an automatic transmission when the brake pedal is released or the accelerator pedal is depressed by the driver, having a first phase of starting up the engine, during which the engine torque starts to rise without being transmitted to the wheels, followed by a second pull-away phase, during which it is gradually transmitted to the wheels while being dependent on a torque setpoint to be transmitted to the wheels which satisfies an objective pull-away time, **characterized in that** the authorization to take torque via a coupling system of the engine and of the transmission is given to a processor (4) of the transmission by a pull-away module of an injection processor (2) of the engine at the time (t_{coupling}) at which the effective engine torque has reached the torque setpoint to be transmitted to the wheels.

2. Control method according to Claim 1, **characterized in that** the processor (4) of the transmission informs the injection processor (2) of the coupling coefficient of the engine and of the transmission.

3. Control method according to Claim 1 or 2, **characterized in that** the processor (4) of the transmission informs the injection processor (2) of a request for modulation of the target engine torque.

4. Control method according to Claim 3, **characterized in that** the transmission coefficient is optimized on the basis of maps established as a function of the engine speed, the target wheel torque, the mass of the vehicle, and the gradient.

5. Control method according to one of the preceding claims, **characterized in that** the processor (4) of the transmission modulates the engine torque setpoint during the pull-away phase until the coupling device reaches its maximum transmission coefficient.

6. Device for controlling the automatic restarting of a vehicle equipped with an automatic transmission when the accelerator pedal is depressed by the driver or when the brake pedal is released and the accelerator pedal is depressed by the driver, having a transmission processor (4) and an engine injection processor (2) comprising a pull-away control module (9) which receives information about the target engine torque from the driver's accelerator pedal, and informs the processor (4) of the transmission of the engine speed, the effective engine torque, the target engine torque, the target wheel torque, and authorization to take torque via the coupling system between the engine and the transmission, **characterized in that** the pull-away control module (9) of the injection processor (2) gives the processor (4) of the transmission the authorization to take torque at the time (t_{coupling}) at which the effective engine torque reaches the torque setpoint to be transmitted to the wheels.

7. Control device according to Claim 6, **characterized in that** the processor (4) of the transmission informs the pull-away control module (9) of the coupling coefficient of the engine and of the transmission.

8. Control device according to Claim 6 or 7, **characterized in that** it has a module (11) for optimizing the torque transmitted to the wheels, which transmits to the pull-away module (9) a coupling coefficient of the transmission and a correction of the target engine torque setpoint.

9. Control device according to Claim 8, **characterized in that** the transmission coefficient is optimized by maps, as a function of the engine speed, the effective engine torque, the target wheel torque, the mass of the vehicle, and the gradient.

10. Control device according to one of Claims 6 to 9, **characterized in that** the processor (4) of the transmission has a pull-away control module (10).
